# EUROPEAN PATENT SPECIFICATION

(11) **EP 0 496 565 B1**
(45) Date of publication and mention of the grant of the patent: **09.04.1997**
(21) Application number: 92300482.4
(22) Date of filing: 20.01.1992
(51) Int. Cl.: G11B 27/10, G11B 20/10

(54) **Digital data reproducing apparatus**
Digitales Datenwiedergabegerät
Appareil de reproduction de données numériques

(30) Priority: 21.01.1991 JP 41415/91
(43) Date of publication of application: 29.07.1992
(73) Proprietor: SONY CORPORATION, Tokyo 141 (JP)
(72) Inventor: Akagiri, Kenzo, Patents Division, Shinagawa-ku, Tokyo 141 (JP); Oikawa, Yoshiaki, Patents Division, Shinagawa-ku, Tokyo 141 (JP)
(74) Representative: Cotter, Ivan John

(56) References cited:
- DE-A- 4 016 553
- PATENT ABSTRACTS OF JAPAN vol. 11, no. 107 (P-563)(2554) 4 April 1987 & JP-A-61 255 536
- PATENT ABSTRACTS OF JAPAN vol. 14, no. 301 (P-1069)(4244) 28 June 1990 & JP-A-2 094 066
- PATENT ABSTRACTS OF JAPAN vol. 11, no. 87 (P-557)(2534) 17 March 1987 & JP-A-61 240 493
- PATENT ABSTRACTS OF JAPAN vol. 12, no. 298 (P-744)(3145) 15 August 1988 & JP-A-63 070 988
- PATENT ABSTRACTS OF JAPAN vol. 13, no. 409 (P-931)(3757) 11 September 1989 & JP-A-1 149 228
- SMPTE JOURNAL. vol. 90, no. 4, April 1981, US pages 262 - 267; ITOH ET AL.: 'Audio - A Digital Commercial Store'
- PATENT ABSTRACTS OF JAPAN vol. 6, no. 156 (P-135)(1034) 17 August 1982 & JP-A-57 074 870

## Description

This invention relates to digital data reproducing apparatus. The apparatus is particularly, but not exclusively, suitable for a digital audio tape recorder (DAT).

When data such as music or speech are recorded by a known tape recorder such as a DAT, then the data are sequentially recorded from the start portion of a magnetic tape provided as a recording medium. Likewise, the music or speech is reproduced in the sequential order of the recorded data by reproducing the magnetic tape from its start portion.

If parts of the recorded data on the magnetic tape are no longer required, new data can be recorded on the magnetic tape where the data no longer required were recorded. If the recordable tape length available is insufficient for the new data to be recorded, it is proposed that two or more recordable portions be located, and data recorded on those portions.

However, if continuous data are divided and recorded on two or more recordable portions, upon playback, the next starting point of the recorded data must be detected and the magnetic tape must then be transported in the fast forward mode or in the rewind mode to that point, after a preceding portion has been reproduced, which causes a interruption of the reproduced sound. This makes the method unsuitable for continuous data such as speech.

Nevertheless, due to the improved utilization factor of the recording medium that results from this method, there is a requirement to use it for continuous data such as speech.

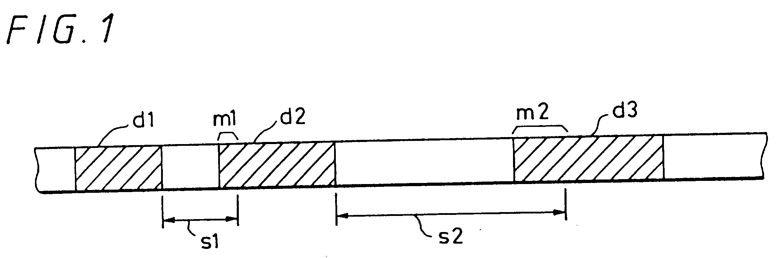

An example of a method of obtaining continuous reproduced sound when continuous data are divided and then recorded on a plurality of portions of a recording medium such as a magnetic tape will be described with reference to Figure 1. In this case, let it be assumed that continuous data are divided and then recorded on three portions of a magnetic tape as shown in Figure 1. More specifically, audio data d1 of a predetermined duration is initially recorded, and then next audio data d2 of a predetermined duration is recorded at a portion distant from the recorded portion of the audio data d1. Further, the next audio data d3 of a predetermined duration is recorded at a portion distant from the recorded portion of audio data d2. In this method, start portions m1 and m2 of the second and third recorded data d2 and d3 are stored in advance in a memory means of the reproducing apparatus. Then, upon reproduction, while the recorded portion of the next audio data d2 is being searched for by the magnetic head after the first audio data d1 has been read out, that is, during a so-called seek operation (during which the magnetic tape is transported in the fast forward mode as indicated by s1 in Figure 1), the start portion m1 of the audio data d2 stored in the memory means is read out and reproduced. Similarly, while the recorded portion of the next audio data d3 is being searched for after the audio data d2 has been read out (during which the magnetic tape is transported in the fast forward mode as indicated by s2 in Figure 1), the data m2 of the audio data d3 stored in the memory means is read out and reproduced.

However, this proposed method does require that the start portions be first stored in the memory means.

Japanese Patent Application JP-A-61240493 discloses a compact disk player in which all of the data is read from the disk and stored in a memory from which it may be immediately read in any order.

SMPTE Journal, April 1981, page 261-265 discloses a system in which audio data stored on a disk is read at high speed to a swing buffer from which the data is then read at a low speed for reproduction.

JP-A-2-94066 discloses a memory for storing a predetermined number of PCM data when installing a tape. PCM data are at first reproduced from the memory until the started tape is in a position and has a speed allowing reproduction of the data currently to be reproduced from the tape.

According to the invention there is provided a digital data reproducing apparatus for continuously reproducing digital data from a recording medium (1) on which an amount of data to be reproduced continuously is divided into a plurality of portions respectively recorded at spaced apart locations of said recording medium, the apparatus comprising:
reading means for reading said digital data by a read head;
moving means for moving said read head into a following location at which a further portion of said continuous digital data is recorded;
memory means for storing read digital data; and
means for outputting the digital data from said memory means while said reproducing head is moved, whereby said digital data are reproduced continuously; characterized by
means for determining and storing address data indicative of the locations of at least said further portions when said recording medium is installed in said reproducing apparatus;
memory control means responsive to said address data for controlling said memory means such that data of the beginning region of at least said further portions are written in said memory means when said recording medium is installed in said reproducing apparatus, and
switching means for inserting after the reproduction of data read from a portion has been finished and the head moves to the location of a following portion, data of the beginning region of said following portion being output from said memory means.

The invention will now be described by way of example with reference to the accompanying drawings, throughout which like parts are referred to by like references, and in which:
Figure 1 is a schematic diagram showing data recorded on a magnetic tape;
Figure 2 (comprising Figures 2A and 2B) is a schematic block diagram of an embodiment of digital data reproducing apparatus according to the present invention;
Figures 3A to 3D are schematic diagrams for explaining the recorded state of data;
Figure 4 is a schematic diagram for explaining a memory; and
Figure 5A and 5B are schematic diagrams for explaining the reproduced state of data.

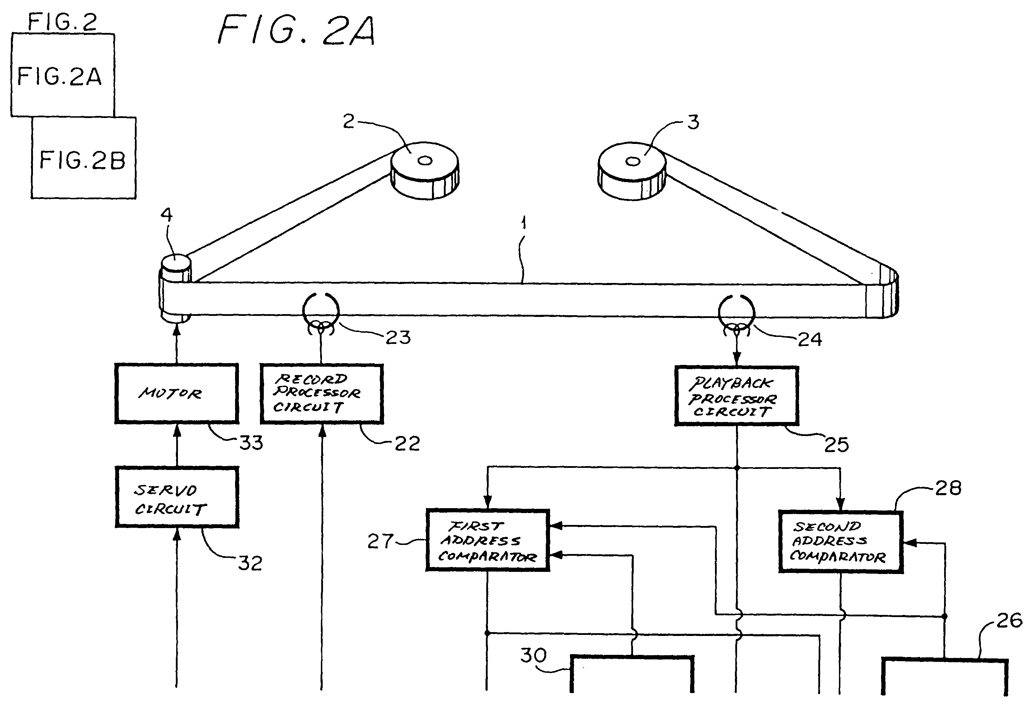

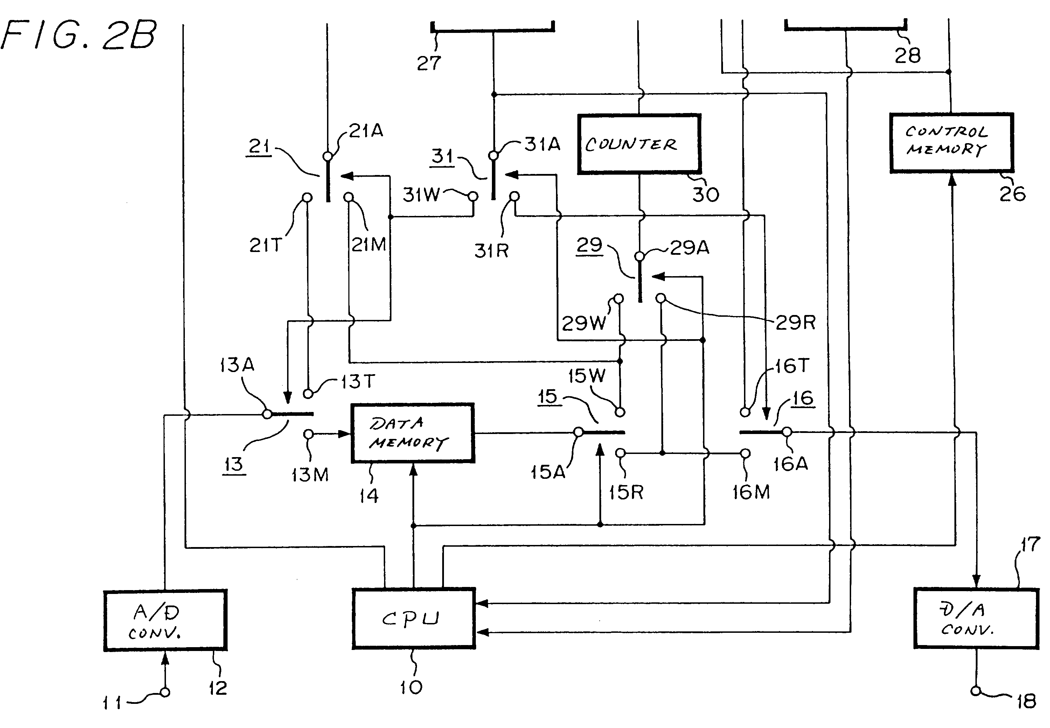

Referring to Figure 2, various data such as a digital audio signal are recorded on and reproduced from a magnetic tape 1 which is supplied from a supply reel 2 and wound around a take-up reel 3. The transport of the tape 1 is controlled by a capstan 4 driven by a motor 33 which is servo-controlled by a servo circuit 32 on the basis of an instruction issued from a central processing unit (CPU) 10 which controls the recording and playback operations of the embodiment.

An analogue audio signal is supplied to a recording signal input terminal 11, and converted into a digital audio signal by an analogue-to-digital (A/D) converter 12. The digital audio signal from the A/D converter 12 is supplied to a movable contact 13A of a first change-over switch 13. The switch 13 is changed in position by a control signal developed at a first fixed contact 31W of a change-over switch 31 which will be described later. The digital audio signal developed at a first fixed contact 13M (memory side contact: that is, a contact engaged when a memory is operated) of the switch 13 is supplied to a data memory 14 and written therein. Write and read of data in the data memory 14 are controlled by the CPU 10, and the data supplied to the data memory 14 is compressed by a high efficiency coding method and then written therein.

A digital audio signal developed at a second fixed contact 13T (tape side contact: that is, a contact engaged when a signal is recorded on or reproduced from the tape 1) of the switch 13 is supplied to a first fixed contact 21T (tape side contact) of a second change-over switch 21. The switch 21 is also changed in position by the control signals developed at the first fixed contact 31W of the switch 31 which will be referred to later. The digital audio signal developed at a movable contact 21A of the switch 21 is supplied to a recording processor circuit 22, and a digital audio signal processed by the recording processor circuit 22 in a predetermined recording fashion is supplied to a recording head 23, thereby to be recorded on a predetermined track of the tape 1 by the recording head 23. In this case, the recording head 23 might be formed as a rotary head similarly to a playback head 24, which will be described later, and the digital audio signal is recorded on oblique tracks of the magnetic tape 1. When data temporarily recorded on the data memory 14 are recorded on the tape 1, header information is inserted into a sub-code of the recorded data in the form of a predetermined identifying code, by the recording processor circuit 22. Further, a predetermined ID code is inserted into the recorded audio data at every predetermined unit. When these ID codes are inserted into the sub-code, then address information (tape positions) at which these ID codes are inserted are also stored in a control memory 26, which will be described later, under the control of the CPU 10.

The digital audio signal read out from the data memory 14 is supplied to a movable contact 15A of a third change-over switch 15. The switch 15 is changed in position by the CPU 10. A digital audio signal developed at a first fixed contact 15W (write side contact: that is, a contact connected when data are written in the memory) of the switch 15 is supplied to the second fixed contact 21M (memory side contact) of the switch 21 and a first fixed contact 29W (write side contact) of a fourth change-over switch 29. The switch 29 is changed in position by the CPU 10. A digital audio signal developed at a movable contact 29A of the switch 29 is supplied to a counter 30. The counter 30 counts data length (that is, the number of blocks) corresponding to the address of the digital audio signal read out from the data memory 14, and supplies its count data to a first address comparator 27.

A digital audio signal developed at a second fixed contact 15R (read-out contact: that is, a contact engaged when data are read out from the memory) of the switch 15 is supplied to a second fixed contact 29R (read-out side contact) of the switch 29 and a first fixed contact 16M (memory side contact) of a fifth change-over switch 16. The switch 16 is changed in position by the control signal developed at a second fixed contact 31R of the switch 31 which will be described later.

The digital audio signal reproduced from the tape 1 by the playback head 24 is supplied to a playback processor circuit 25. The digital audio signal processed by the playback processor circuit 25 in a predetermined playback fashion is supplied to a second fixed contact 16T (tape side contact) of the switch 16, and the first and a second address comparator 27 and 28. A digital audio signal developed at a movable contact 16A of the switch 16 is supplied to a digital-to-analogue (D/A) converter 17, and an analogue audio signal converted by the D/A converter 17 and is fed to a reproduced signal output terminal 18.

The control memory 26 controls the recording position of data. Address data illustrative of a present tape position and which are read out from the control memory 26 under the control of the CPU 10 are supplied to the first and second address comparators 27 and 28. The control memory 26 stores therein all address information concerning the tape 1 which is installed in the apparatus, so that address information such as addresses at which information can be recorded, addresses used to perform the seek control during the playback mode, or the like, can be determined on the basis of the stored information in the control memory 26. Address information stored in the control memory 26 might be recording addresses of data temporarily stored in the data memory 14, for example, and which are recorded on the tape 1. Then, the address information of the control memory 26 is automatically recorded in the recording mode if a magnetic tape in use is the tape 1 which is recorded by this recording and/or reproducing apparatus. If on the other hand, if the magnetic tape is a tape which has been recorded by another recording apparatus, then when this tape is installed in this reproducing apparatus, it is searched from end to the end at high speed to read out the sub-code, which is then stored in the control memory 26 on the basis of the read-out information. This search is carried out at forty times the normal playback speed.

In this embodiment, during the high speed search mode, the information concerning the recording address of data temporarily recorded in the data memory 14 and which are recorded on the tape 1 is detected. Thus, when the detected information is stored in the control memory 26, recording data of associated address are sequentially reproduced from the tape 1 and reproduced data are stored in the data memory 14. That is, when the tape 1, which has been recorded by an apparatus other than this recording and/or reproducing apparatus (or when the magnetic tape 1, which is recorded by this apparatus and which has been temporarily ejected from this apparatus), is installed in this recording and/or reproducing apparatus, data necessary for the playback mode are stored beforehand in the data memory 14 under the control of the CPU 10. The data stored in the data memory 14 can be judged by the header information inserted into the sub-code of the recording data.

The first address comparator 27 compares the address data read out from the control memory 26 and data counted by the counter 30. A compared result is supplied to the CPU 10, and a switching control signal based on the compared result is supplied to a movable contact 31A of the switch 31. Then, the switches 13 and 21 are changed in position on the basis of the switching control signal developed at the first fixed contact 31W (write side contact) of the switch 31.

Further, the switch 16 is changed in position on the basis of a switching control signal developed at the second fixed contact 31R (read-out side contact) of the switch 31.

The second address comparator 28 compares the address data read out from the control memory 26 and address data supplied from the playback processor circuit 25 on the basis of the reproduced signal from the playback head 24, and supplies a compared result to the CPU 10.

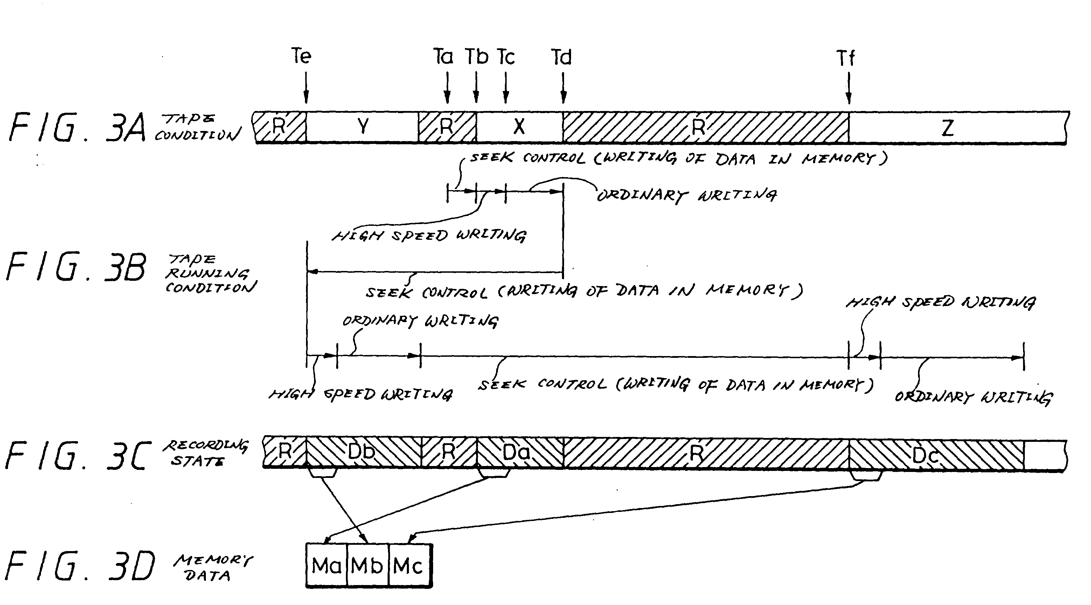

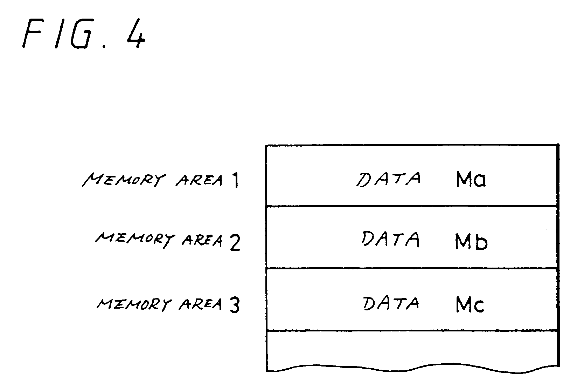

Operation in which an audio signal is recorded by this signal recording and/or reproducing apparatus will be described with reference to Figures 3A to 3D and Figure 4.

When an audio signal is recorded on the tape 1, the movable contacts 15A, 29A and 31A of the switches 15, 29 and 31 are connected to the write side contacts 15W, 29W and 31W under the control of the CPU 10. Then, by the switching control signal supplied from the first address comparator 27 through the switch 31, the movable contacts 13A and 21A of the switches 13 and 21 are connected to the memory side contacts 13M and 21M.

In this case, the tape 1 has discontinuous recorded data R which cannot be erased and new data can be written (recorded) on the tape 1 at its portion where recorded data R are not present as, for example, shown in Figure 3A. Further, the recording head 23 and the playback head 24 are able to record and/or reproduce an address position Ta in certain recorded data R.

In this state, if an audio signal to be recorded is supplied to the input terminal 11, then this input audio signal is converted into a digital audio signal and temporarily written in the data memory 14 through the switch 13. When the digital audio signal is written in the data memory 14, the data are compressed by the high efficiency coding method and written in a memory area 1 as shown in Figure 4, for example. While the digital audio signal is being written in the data memory 14, the CPU 10 supplies an instruction to the servo circuit 32 to transport the tape 1 at high speed, thereby carrying out the seek control to find a starting portion Tb of a data recordable area X of the nearest address position. The CPU 10 determines the recordable area X from data stored in the control memory 26 and finds the starting portion of the recorded digital audio signal by detecting a coincidence between the address instructed by the control memory 26 and the address obtained from the reproduced signal of the playback head 24.

When this tape position Tb is detected, then the digital audio signal written in the memory area 1 of the data memory 14 is timebase-compressed and read out while the tape 1 is being transported at high speed. Then, the timebase-compressed digital audio signal thus read out is supplied through the switches 15 and 21 to the recording head 23, whereby the digital audio signal is written on the tape 1 at high speed. When the digital audio signal is read out from the data memory 14, the digital audio signal is read out from the data memory 14 in response to a high speed clock corresponding to the transport speed of the tape 1 and the digital audio signal thus read out is timebase-compressed. As the digital audio signal is being written on the tape 1 at high speed, header information indicating that the digital audio signal is read out from the data memory 14 and then recorded on the magnetic tape 1 is added to the sub-code of data to be written by the recording processor circuit 22. Address information stored in the control memory 26 also has header information added indicating that the digital audio signal is read out from the data memory 14, and then written on the tape 1. Since the digital audio signal is written on the tape 1 at high speed, all digital audio signals written in the data memory 14 are read out at a tape position Tc after a predetermined time from the start of the high speed writing, and the timing of the digital audio signal becomes coincident with that of the input audio signal.

At that time, by the control of the first address comparator 27, the movable contacts 13A and 21A of the switches 13 and 21 are connected to the tape side contacts 13T and 21T, allowing the digital audio signal from the A/D converter 12 to be directly supplied to the recording head 23. Therefore, ordinary writing is carried out, in which the input audio signal is written on the tape 1 not through the data memory 14. In this case, the tape 1 is transported at the normal speed from the tape position Tc under the control of the CPU 10.

Operation of the first address comparator 27 will be described below.

The counter 30 is supplied with data (digital audio signal) read out from the data memory 14 through the switch 29, and the data length thereof is counted by the counter 30. Count data from the counter 30 are supplied to the first address comparator 27 which compares address data of the present tape position supplied from the control memory 26, and the count data. The first address comparator 27 determines at a timing point in which both data are coincident, that all digital audio signals written in the data memory 14 are read out, and generates the switching control signal by which the switches 13 and 21 engage the tape side contacts 13T and 21T. This switching control signal is also supplied to the CPU 10 which enables the tape 1 to be transported at the normal tape speed.

When the digital audio signal is written at the normal tape speed which does not need the data memory 14 and the writing reaches an end portion Td of the data recordable area X, then the movable contacts 13A and 21A of the switches 13 and 21 are connected to the memory side contacts 13M and 21M again. Then, the digital audio signal from the A/D converter 12 is compressed with a predetermined compression ratio, and then written in the data memory 14. At that time, the digital audio signal is written in a memory area 2 next to the above-mentioned memory area 1 in Figure 4.

The switches 13 and 21 are switched by comparing the address data of the present tape position supplied from the control memory 26 and the present count data.

While the digital audio signal is being written as described above, the tape 1 is transported at high speed, and the seek control is carried out to detect the starting portion of the tape position Te of the data recordable area Y of the next address position. At that time, the tape 1 is transported in the opposite direction.

When the starting portion of the tape position Te is detected, then the tape 1 is transported at high speed in the positive direction thereby to read out the digital audio signal written in the memory area 2 of the data memory 14. Then, the digital audio signal thus read out is supplied through the switches 15 and 21 to the recording head 23, whereby the digital audio signal is written in the tape 1 at high speed. Also in that event, by the processing in the recording circuit 22, the sub-code of data to be written has header information added indicating that the digital audio signal is read out from the data memory 14, and is then recorded in the tape 1.

When the digital audio signal becomes coincident with the input audio signal in timing while the digital audio signal is written in the tape 1 at high speed, the digital audio signal is written in the end portion of the data recordable area Y in the normal writing mode. At the end portion of the data recordable area Y, the seek control is carried out to detect the first tape position Tf of a data recordable area Z of the next address position while the input audio signal is being written in the data memory 14 again. Accordingly, the digital audio signal is successively recorded on the tape 1 at its portion where the unerasable recorded data R is not provided, similarly until an audio signal is input to the input terminal 11.

If the recording (writing) of the audio signal ends in the data recordable area Z, continuous audio signals Da, Db and Dc (see Figure 3C) are recorded on data recordable areas X, Y and Z (see Figure 3A). In this case, during the seek control, data temporarily stored in the data memory 14 and written in the tape 1 at high speed are stored in the data memory 14. That is, when the recording has ended, then data Ma, Mb and Mc (see Figure 3D) written in the tape 1 at high speed are left in the memory areas 1, 2 and 3 within the data memory 14 as shown in Figure 4, and data in the memory areas 1, 2 and 3 are stored in the data memory 14. The data Ma, Mb and Mc thus stored are utilized in the playback mode which will be described below.

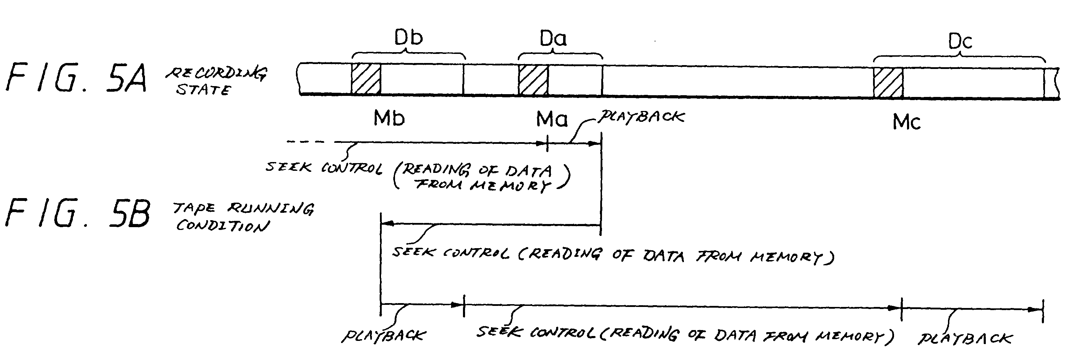

Operation in which the audio signal recorded by this signal recording and/or reproducing apparatus is played back will be described with reference to Figures 5A and 5B.

When the recorded audio signal is reproduced from the tape 1, then address information of the reproduced portion is first read out from the control memory 26, and the CPU 10 controls the playback on the basis of the address information thus read out. Explaining the address information stored in the control memory 26, it is to be noted that this address information might be information (header information) concerning the recording address of data temporarily stored in the data memory 14 upon recording and which is then recorded on the tape 1. When audio data intermittently recorded on the tape 1 are reproduced continuously, the CPU 10 determines the address having the header information on the basis of the data stored in the control memory 26, thereby controlling the playback. More specifically, upon playback, under the control of the CPU 10, the movable contacts 15A, 29A and 31A of the change-over switches 15, 29 and 31 are connected to the read-out side contacts 15R, 29R and 31R. Then, the movable contact 16A of the switch 16 is connected to the memory side contact 16M by the switching control signal supplied from the first address comparator 27 through the switch 31.

When the data Da, Db and Dc (see Figure 5A) intermittently recorded as described above are reproduced, the seek control (fast forward or rewind) is carried out to detect the starting portion of the recorded area of the first recorded data Da. While the seek control is being carried out, the data Ma for the starting portion of the data Da stored in the data memory 14 are read out from the data memory 14 and supplied through the switch 16 to the D/A converter 17. Then, an analogue audio signal from the D/A converter 17 is supplied from the output terminal 18. In that event, the data Ma is expanded with a ratio corresponding to the compression ratio upon writing, and then read out. An expansion ratio is similarly set when other data are read out.

When the starting portion of the recorded area of the data Da is detected by this seek control, then the tape 1 is transported in the fast forward mode by the amount corresponding to the read-out portion of the data Ma from this data memory 14. Further, when the first address comparator 27 detects a coincidence between the address of the data Ma read-out from the data memory 14 and the address of the present tape position, the first address comparator 27 generates a switching control signal by which the movable contact 16A of the switch 16 engages the tape side contact 16T. By this switching of the switch 16, the digital audio signal based on the reproduced output of the playback head 24 is supplied to the D/A converter 17 and an audio signal, provided by reproducing the tape 1 up to end portion of the recording area of the data Da by the playback head 24, is supplied from the output terminal 18.

When the tape 1 is reproduced up to the end portion of the recording area of the data Da, then the first address comparator 27 detects this playback on the basis of the address position and allows the switch 16 again to engage the movable contact 16A and the memory side contact 16M. Then, the seek control is carried out to detect the starting portion of the recorded area of the data Db recorded next at high speed. During this seek control, the data Mb corresponding to the starting portion of the data Db and which is preserved in the data memory 14 is read out, and the analogue audio signal of the data Mb converted by the D/A converter 17 is supplied from the output terminal 18.

When the starting portion of the recorded area of the data Db is detected by this seek control, the tape 1 is transported by the amount corresponding to the amount of the data Mb read out from the data memory 14 in the fast forward mode. When the coincidence between the address of the data Mb read out from the data memory 14 and the address indicative of the present tape position is detected by the first address comparator 27, the movable contact 16A of the switch 16 engages the tape side contact 16T, and the audio signal based on the reproduced output of the playback head 24 is supplied from the output terminal 18.

When the tape 1 is reproduced at its end portion of the recorded area of the data Db, then the movable contact 16A of the switch 16 engages the memory side contact 16M. Then, the seek control is carried out to detect the starting portion of the recorded area of the data Dc recorded next at high speed. Also, the data Mc at its starting portion is the data Dc and which is stored in the data memory 14 is read out and the analogue audio signal of the data Mc is supplied from the output terminal 18. Similarly, so long as the recording of a set of audio signals is continued, the seek control of the next recorded portion and the output of the audio signal read out from the memory 14 during the seek control are carried out alternately.

With this embodiment, since a continuous input audio signal is recorded on the tape 1 discontinuously in a real time fashion, and also various data such as the continuous audio data are recorded by utilizing the data erasable portion (or unnecessary data recorded portion) of the tape 1, the tape 1 can be recorded efficiently. Further, when data discontinuously recorded is reproduced, then such data can be continuously output in a real time fashion. Furthermore, by carrying out the above search when the tape 1 is installed in the reproducing apparatus, the non-recorded portion of the tape 1 can be immediately determined on the basis of the search result, thus making it possible easily to determined the portion in which new data can be recorded.

While the present invention is applied to the audio signal recording and/or reproducing apparatus as described above, it is not limited thereto and may be applied to a recording and/or reproducing apparatus for recording and/or reproducing a variety of other data. In addition, while magnetic tape is employed as the recording medium as described above, the invention is not limited thereto and other recording media such as a disc or the like may be utilized.

## Claims

1. A digital data reproducing apparatus for continuously reproducing digital data from a recording medium (1) on which an amount of data to be reproduced continuously is divided into a plurality of portions (Dₐ, D_{b}, D_{c}) respectively recorded at spaced apart locations of said recording medium (1), the apparatus comprising:
reading means (24, 25) for reading said digital data by a read head (24);
moving means (4, 33, 32) for moving said read head (24) into a following location at which a further portion of said continuous digital data is recorded;
memory means (14) for storing read digital data; and
means (10, 15, 16, 17) for outputting the digital data from said memory means (14) while said reproducing head (24) is moved, whereby said digital data are reproduced continuously; characterized by means (26, 27, 28, 30) for determining and storing address data indicative of the locations of at least said further portions (D_{b}, D_{c}) when said recording medium (1) is installed in said reproducing apparatus;
memory control means (10) responsive to said address data for controlling said memory means (14) such that data (Mₐ, M_{b}, M_{c}) of the beginning region of at least said further portions are written in said memory means (14) when said recording medium (1) is installed in said reproducing apparatus, and
switching means (16) for inserting after the reproduction of data read from a portion has been finished and the head moves to the location of a following portion, data of the beginning region of said following portion being output from said memory means (14).

2. Apparatus according to claim 1 wherein said digital data are a digital audio signal and said recording medium (1) is a tape (1).

3. Apparatus according to claim 1 or claim 2 wherein said memory control means (10) includes encoding means for encoding the digital data to be written in said memory means (14) to compressed data.

4. Apparatus according to claim 3 wherein said reading means (10, 15, 16, 17) includes decoding means for decoding the compressed data into the original data.

5. Apparatus according to any one of the preceding claims further comprising control memory means (26) for storing said address data indicating the location at which said first and second portions of said continuous digital data are recorded.

## Patentansprüche

1. Digitales Datenwiedergabegerät zur fortlaufenden Wiedergabe digitaler Daten aus einem Aufzeichnungsträger (1), auf dem eine Datenmenge, die fortlaufend reproduziert werden soll, in mehrere Bereiche (Dₐ, D_{b}, D_{c}) unterteilt ist, die jeweils an voneinander beabstandeten Stellen des Aufzeichnungsträgers (1) aufgezeichnet sind, wobei das Gerät aufweist:
eine Leseeinrichtung (24, 25) zum Lesen der digitalen Daten durch einen Lesekopf (24);
eine Verschiebeeinrichtung (4, 33, 32) zum Verschieben des Lesekopfs (24) in eine anschließende Lage, an der ein weiterer Bereich der fortlaufenden digitalen Daten aufgezeichnet ist;
einen Speicher (14) zum Speichern der gelesenen digitalen Daten; und
eine Einrichtung (10, 15, 16, 17) zur Ausgabe der digitalen Daten aus dem Speicher (14), während der Wiedergabekopf (24) verschoben wird, wodurch die digitalen Daten fortlaufend reproduziert werden;
**gekennzeichnet durch**
eine Einrichtung (26, 27, 28, 30) zum Bestimmen und Speichern von Adreßdaten, die die Stellen der zumindest weiteren Bereiche (D_{b}, D_{c}) anzeigt, wenn der Aufzeichnungsträger (1) im Wiedergabegerät installiert ist;
eine Speichersteuerung (26), die auf die Adreßdaten antwortet, um den Speicher (14) so zu steuern, daß Daten (Mₐ, M_{b}, M_{c}) des beginnenden Bereichs der zumindest weiteren Bereiche in den Speicher (14) geschrieben werden, wenn der Aufzeichnungsträger (1) im Wiedergabegerät installiert wird, und
eine Schalteinrichtung (16), um, nachdem die Wiedergabe von aus einem Bereich gelesenen Daten beendet wurde und der Kopf sich an die Stelle eines folgenden Bereichs verschiebt, Daten des beginnenden Bereichs des folgenden Bereichs, die aus dem Speicher (14) ausgegeben werden, einzufügen.

2. Gerät nach Anspruch 1, wobei die digitalen Daten ein digitales Audiosignal sind und der Aufzeichnungsträger (1) ein Band (1) ist.

3. Gerät nach Anspruch 1 oder 2, wobei die Speichersteuerung (10) eine Codiereinrichtung besitzt, um die digitalen Daten, die in den Speicher (14) zu schreiben sind, in komprimierte Daten zu codieren.

4. Gerät nach Anspruch 3, wobei die Leseeinrichtung (10, 15, 16, 17) eine Decodiereinrichtung besitzt, um die komprimierten Daten in die ursprünglichen Daten zu decodieren.

5. Gerät nach einem der vorhergehenden Ansprüche, welches außerdem einen Steuerspeicher (26) besitzt, um die Adreßdaten zu speichern, die die Stelle anzeigen, bei der der erste und zweite Bereich der fortlaufenden digitalen Daten aufgezeichnet ist.

## Revendications

1. Appareil de reproduction de données numériques pour reproduire en continu des données numériques provenant d'un support d'enregistrement (1) sur lequel une quantité de données à reproduire en continu est divisée en une pluralité de parties (Da, Db, Dc) respectivement enregistrées à des emplacements espacés dudit support d'enregistrement (1), l'appareil comprenant :
un moyen de lecture (24, 25) pour lire lesdites données numériques par une tête de lecture (24) ;
un moyen de déplacement (4, 33, 32) pour déplacer ladite tête de lecture (24) jusqu'à un emplacement suivant où une autre partie desdites données numériques en continu est enregistrée ;
un moyen de mémoire (14) pour stocker des données numériques lues ; et,
un moyen (10, 15, 16,17) pour sortir les données numériques dudit moyen de mémoire (14) pendant que ladite tête de reproduction (24) est déplacée, lesdites données numériques étant ainsi reproduites en continu ;
caractérisé par :
un moyen (26, 27, 28,30) pour déterminer et stocker des données d'adresse indicatives des emplacements d'au moins lesdites autres parties (Db, Dc) quand ledit support d'enregistrement (1) est mis en place dans ledit appareil de reproduction ;
un moyen de commande de mémoire (10) réagissant auxdites données d'adresse pour commander ledit moyen de mémoire (14) de telle sorte que les données (Ma, Mb, Mc) de la région de début d'au moins lesdites autres parties sont écrites dans ledit moyen de mémoire (14) quand ledit support d'enregistrement (1) est mis en place dans ledit appareil de reproduction ; et,
un moyen de commutation (16) pour insérer, après que la reproduction des données lues dans une partie ait été terminée et que la tête se soit déplacée jusqu'à l'emplacement d'une partie suivante, des données de la région de début de ladite partie suivante qui est sortie dudit moyen de mémoire (14).

2. Appareil selon la revendication 1, dans lequel lesdites données numériques sont un signal sonore numérique et ledit support d'enregistrement (1) est une bande (1).

3. Appareil selon la revendication 1 ou la revendication 2, dans lequel ledit moyen de commande de mémoire (10) comprend un moyen de codage pour coder les données numériques à écrire dans ledit moyen de mémoire (14) en données comprimées.

4. Appareil selon la revendication 3, dans lequel ledit moyen de lecture (10, 15, 16, 17) comprend un moyen de décodage pour décoder les données comprimées en les données initiales.

5. Appareil selon l'une quelconque des revendications précédentes, comprenant en outre un moyen de mémoire de commande (26) pour stocker lesdites données d'adresse indiquant l'emplacement où sont enregistrées lesdites première et seconde parties desdites données numériques en continu.
